# EUROPEAN PATENT APPLICATION

(11) **EP 1 982 756 A1**
(43) Date of publication of application: **22.10.2008**
(21) Application number: 07425228.9
(22) Date of filing: 19.04.2007
(51) Int. Cl.: B01D 53/90, F01N 3/20

(54) **An exhaust system of an internal combustion engine**

(71) Applicant: Magneti Marelli Sistemi di Scarico S.p.a., 20011 Corbetta (IT)
(72) Inventor: Gambarotto, Massimiliano, 10098 Rivoli (IT)
(74) Representative: Jorio, Paolo

(57) **Abstract**

An exhaust system (1) of an internal combustion engine (2); the exhaust system (1) is provided with: an exhaust pipe (3) which originates from an exhaust manifold (4) of the internal combustion engine (2); an oxidising catalyser (5) arranged along the exhaust pipe (3); a catalytic system (7; 5) arranged along the exhaust pipe (3) downstream of the oxidising catalyser (5); an injection device (8), which is coupled to the exhaust pipe (3) immediately upstream of the catalytic system (7; 5) for injecting a reducing additive inside the exhaust pipe (3) itself; and at least one static mixer (9), which is inserted along the exhaust pipe (3) at the injection device (8) and comprises a tubular body (10) presenting a central symmetry axis (11), and a plurality of fins (12) which originate from an internal side surface (13) of the tubular body (10).

## Description

### TECHNICAL FIELD

The present invention relates to an exhaust system of an internal combustion engine provided with exhaust gas post-treatment.

The present invention finds advantageous application in an internal combustion engine provided with exhaust gas post-treatment, to which explicit reference will be made in the following description without however loosing in generality.

### BACKGROUND ART

The future international standards related to the containment of polluting gas emissions produced by cars (the so-called "Euro6" standards) contemplate a very low limit for the NOₓ molecules which may be released into the atmosphere.

The respect of such limits is particularly critical, especially for Diesel engines; for this reason, it has been suggested to equip the exhaust system of a Diesel engine with a further SCR (Selective Catalytic Reduction) catalyser adapted to convert the NOₓ molecules (NO₂ or NO) into nitrogen (N₂), which is an inert gas, and water (H₂0). The breakdown reaction of NOₓ molecules into nitrogen and oxygen is difficult to obtain without the use of an appropriate reducing agent, which has been generally identified in ammonia (NH₃). The reducing agent must be injected inside the exhaust system upstream of the SCR catalyser so as to be mixed with the exhaust gases before being introduced into the SCR catalyser.

However, storing ammonia in a car is not advisable due to evident safety reasons related to the fact that ammonia is toxic. Consequently, it has been suggested to store and inject an aqueous urea solution, because urea breaks down into ammonia by effect of the exhaust gas heat and also in part by catalytic effect.

A problem related to the injection of an aqueous urea solution in the exhaust system is linked to the fact that the breakdown of the urea also determines the formation of isocyanic acid (HNCO), which may thicken and polymerise and thus be deposited on the internal walls of the exhaust system forming solid incrustations which are difficult to remove. In order to avoid the polymerisation of the isocyanic acid produced by the breakdown of urea, it has been suggested to insert in the exhaust system and near the injection zone of the urea a mixer, which by forming turbulences in the exhaust gases prevents the localised thickening of the isocyanic acid and thus prevents the polymerisation of the isocyanic acid itself. Obviously, the presence of a mixer which forms turbulences in the exhaust gas immediately before the introduction of the exhaust gas itself in the SCR catalyser also increases the efficiency of the SCR catalyser because it makes the dispersion of the reducing agent (i.e. of the ammonia) more homogenous in the exhaust gases.

Patent application EP1514591A1 describes a mixer, which is arranged in an exhaust system of an internal combustion engine immediately upstream of a SCR catalyser which receives the hot exhaust gases mixed to reducing additives. Similarly, patent applications EP1022048A1, DE10060808A1, WO0107763A1, WO9913972A1, WO9905402A1, WO9905401A1, EP1748162A1, DE10248294A1, WO0009869A1, WO2005073524A1, WO0112301A1, EP0526392A1, EP0894523A1 also describe exhaust systems provided with mixers arranged near reducing additive injectors.

However, the known mixers of the type described above present the drawback of not presenting an optimal balance between the opposing needs of efficiency (i.e. of ensuring an adequate mixing of exhaust gases) and of efficiency (i.e. of limiting the losses of load in exhaust gases). In other words, the known mixers of the type described above either present a low efficacy (i.e. do not ensure an adequate mixing of the exhaust gases) or present a low efficiency (i.e. cause high losses of load in exhaust gases).

### DISCLOSURE OF INVENTION

It is the object of the present invention to provide an exhaust system of an internal combustion engine, which exhaust system is free from the above-described drawbacks, and specifically, is easy and cost-effective to manufacture.

According to the present invention, an exhaust system of an internal combustion engine is provided according to that claimed in the accompanying claims.

### BRIEF DESCRIPTION OF THE DRAWINGS

The present invention will now be described with reference to the accompanying drawings which illustrate a non-limitative example of embodiment thereof, in which:
- figure 1 is a diagrammatic view of an exhaust system of an internal combustion engine provided with exhaust gas post-treatment and made in accordance with the present invention; and
- figures 2, 3 and 4 are three different diagrammatic, perspective views of a mixer of the exhaust system in figure 1.

### PREFERRED EMBODIMENTS OF THE INVENTION

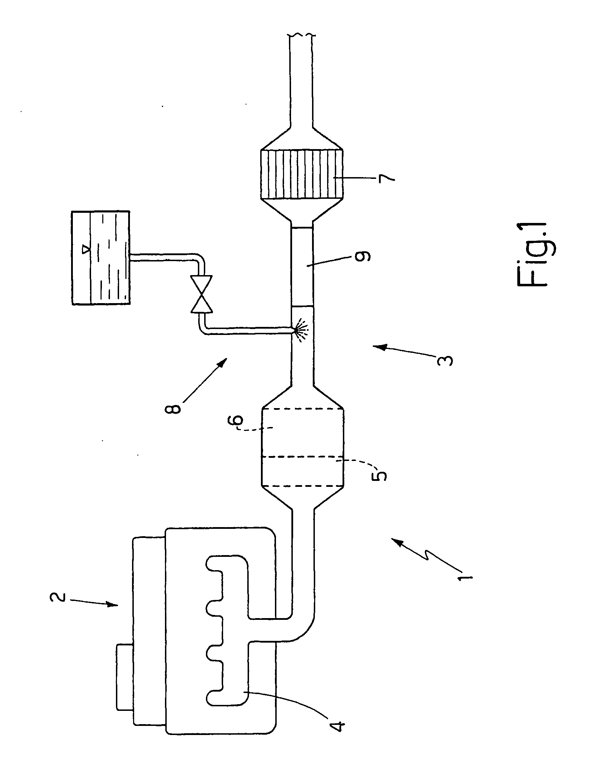

In figure 1, numeral 1 indicates as a whole an exhaust system of an internal combustion engine 2 working according to the "Diesel" cycle (i.e. fed with diesel fuel or the like).

Exhaust system 1 emits the gases produced by the combustion into the atmosphere and comprises an exhaust pipe 3 which originates from an exhaust manifold 4 of internal combustion engine 2. An oxidising catalyser 5 and a particulate filter 6 are arranged along exhaust pipe 3; in figure 1, oxidising catalyser 5 and particulate filter 6 are arranged one after the other within a same, common tubular container.

Furthermore, a SCR (Selective Catalytic Reduction) catalytic system 7 for the post-treatment of the NOₓ molecules (NO and NO₂) is arranged along exhaust pipe 3 and downstream of oxidising catalyser 5. SCR catalytic system 7 may comprise a single SCR catalyser 7 as shown in figure 1, or may comprise a set (normally three) of catalysers which jointly perform the SCR function for the post-treatment of NOₓ molecules.

An injection device 8 is coupled to exhaust pipe 3 immediately upstream of catalytic system 7, which injection device is adapted to inject a reducing additive and specifically an aqueous urea solution (i.e. a solution of urea and water) inside exhaust pipe 3 itself. In use, by effect of the heat of the exhaust gases present inside exhaust pipe 3, the urea injected inside exhaust pipe 3 itself spontaneously breaks down into isocyanic acid (HNCO) and ammonia (NH₃), which ammonia works as reducing agent inside catalytic system 7 for facilitating the breakdown reaction of the NOₓ molecules into nitrogen (N₂) and water (H₂O).

A static mixer 9 is inserted along exhaust pipe 3 and at injection device 8, which mixer has the function of generating turbulences in the exhaust gases present inside exhaust pipe 3 so as to prevent the localised thickening of the isocyanic acid (which is formed during the urea breakdown) and thus prevents the polymerisation of the isocyanic acid itself and so as to increase the efficiency of catalytic system 7 making the dispersion of ammonia more homogenous in the exhaust gases. In the embodiment shown in figure 1, static mixer 9 is arranged downstream of injection device 8 (i.e. between injection device 8 and catalytic system 7); alternatively, static mixer 9 could be arranged upstream of injection device 8. According to a further embodiment (not shown), two static mixers 9 could be arranged respectively upstream and downstream of injection device 8.

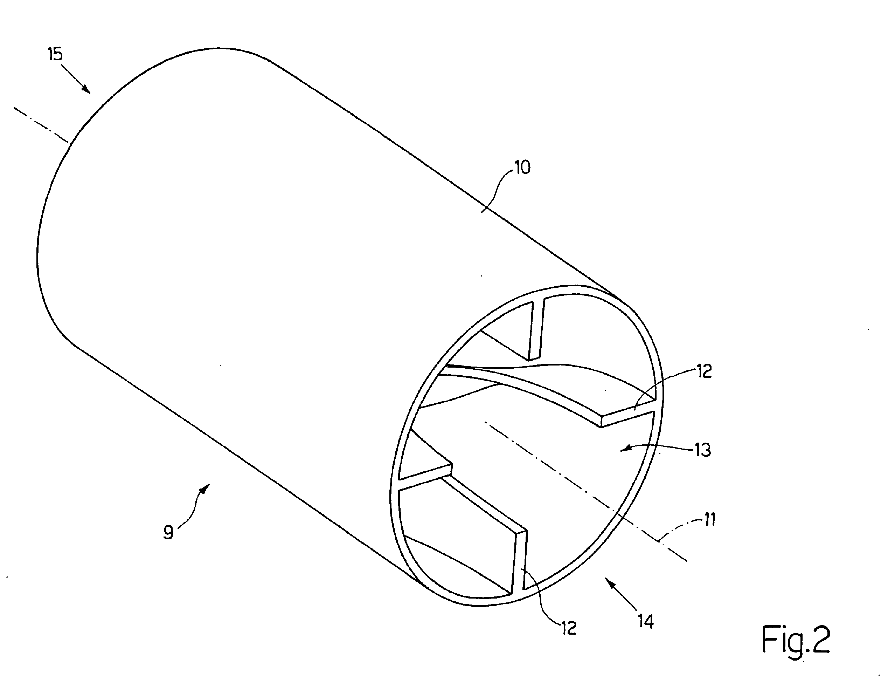

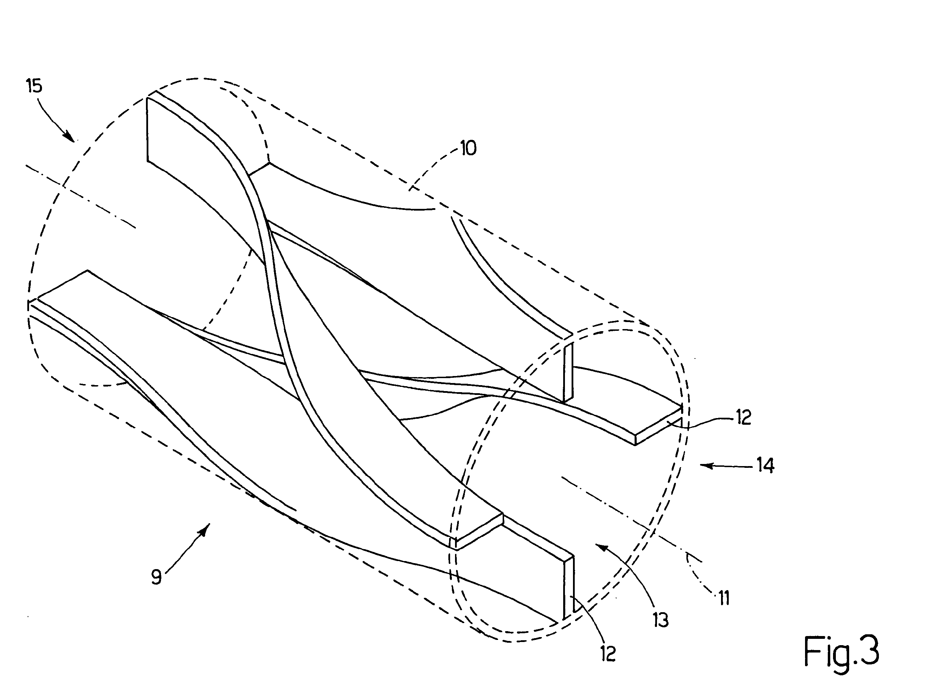

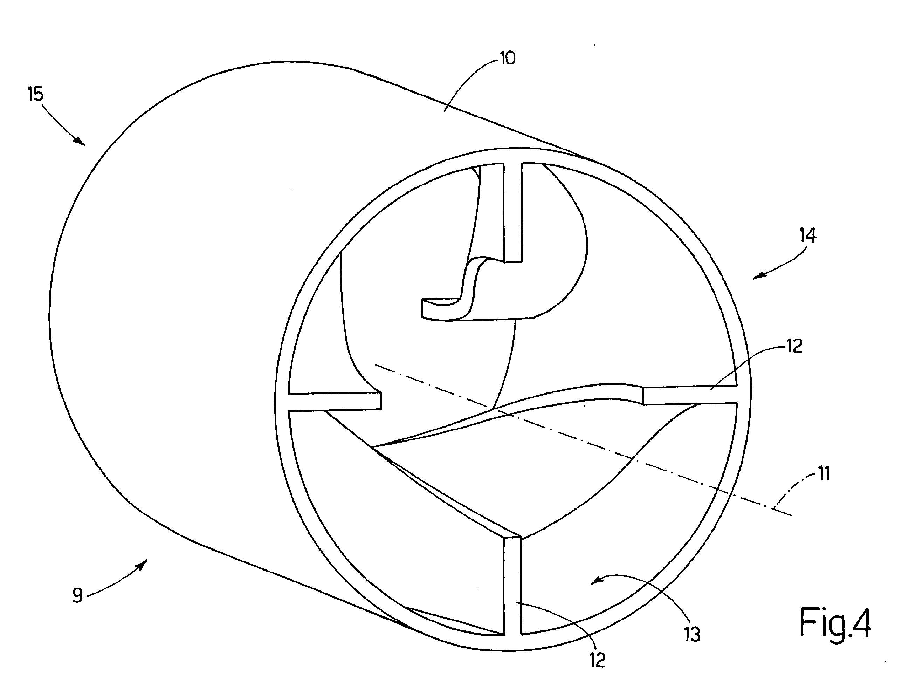

As shown in figures 2, 3 and 4, static mixer 9 comprises a tubular cylindrical body 10, presenting a central symmetry axis 11, and four fins 12 which originate from an internal side surface 13 of tubular body 10 and are symmetrically distributed about central symmetry axis 11 (i.e. are arranged at 90° from each other). According to a different embodiment (not shown), static mixer 9 may comprise a different number of fins 12 (e.g. three or five) symmetrically distributed about central symmetric axis 11. Each fin 12 of static mixer 9 seamlessly extends from an inlet opening 14 of cylindrical tubular body 10 to an outlet opening 15 of cylindrical tubular body 10. Each fin 12 of static mixer 9 is fastened along the internal side surface 13 of tubular body 10 so as to form a helix. Each fin 12 of static mixer 9 presents a radial dimension either smaller than or equal to 0.8 times the internal radius of tubular body 10. According to a preferred embodiment, each fin 12 of static mixer 9 presents a radial dimension either smaller than or equal to 0.5 times the internal radius of tubular body 10.

Preferably, each fin 12 of static mixer 9 is screwed along internal side surface 13 of tubular body 10 performing a rotation of approximately 90° from inlet opening 14 of cylindrical tubular body 10 to outlet opening 15 of cylindrical tubular body 10. More in general, each fin 12 of static mixer 9 is screwed along internal side surface 13 of tubular body 10 performing a rotation comprised between 60° and 120° from inlet opening 14 of cylindrical tubular body 10 to outlet opening 15 of cylindrical tubular body 10.

Preferably, tubular body 10 of static mixer 9 presents a length comprised between 1 and 4 times its diameter, and specifically tubular body 10 of static mixer 9 presents a length approximately 1.8 times its diameter.

Preferably, each fin 12 of static mixer 9 presents a rectangular cross section; in the rectangular cross section of each fin 12 of static mixer 9, the longer side presents a length comprised between 2 and 10 times, and specifically approximately 6 times, the length of the smaller side. According to a possible embodiment (not shown), each fin 12 of static mixer 9 presents a rectangular cross section having rounded upper and/or lower edges to increase fluid-dynamic efficiency.

According to a different embodiment (not shown), tubular body 10 may have a section other than circular (e.g. an elliptical section or a square section).

Above-described static mixer 9 may be made by welding fins 12 to tubular body 10 by means of micro-casting, or by helically winding a flat plate obtained by extrusion and provided with fins 12 so as to form a tube.

According to a different embodiment (not shown) injection device 8 is arranged upstream of oxidising catalyser 5 for injecting fuel (e.g. diesel fuel) inside exhaust pipe 3, which fuel burns inside oxidising catalyser 5 to increase the temperature inside the oxidising catalyser 5 itself during a regeneration process. In this case, static mixer 9 is arranged upstream of oxidising catalyser 5.

The above-described static mixer 9 presents numerous advantages, because it is simple and cost-effective to make, is particularly robust (thus presenting a long working life and a very low risk of breakage) and above all presents an optimal balance between the opposite needs of efficacy (i.e. ensuring an adequate mixing of the exhaust gases) and efficacy (i.e. causing limited load losses in the exhaust gases). In other words, the above-described static mixer 9 presents at the same time a high efficacy (i.e. ensures an adequate mixing of the exhaust gases) and a high efficiency (i.e. causes low load losses in the exhaust gases) .

## Claims

1. An exhaust system (1) of an internal combustion engine (2); the exhaust system (1) comprises:
an exhaust pipe (3) which originates from an exhaust manifold (4) of the internal combustion engine (2);
a least one catalytic system (7; 5) arranged along the exhaust pipe (3);
an injection device (8), which is coupled to the exhaust pipe (3) immediately upstream of the catalytic system (7; 5) for injecting an additive inside the exhaust pipe (3) itself; and
at least one static mixer (9), which is inserted along the exhaust pipe (3) at the injection device (8) and comprises a tubular body (10) presenting a central symmetric axis (11), and a plurality of fins (12) which originate from an internal side surface (13) of the tubular body (10);
the exhaust system (1) is **characterised in that**:
each fin (12) of the static mixer (9) seamlessly extends from an inlet opening (14) of the tubular body (10) to an outlet opening (15) of the tubular body (10);
each fin (12) of the static mixer (9) presents a radial dimension either smaller than or equal to 0.8 times the internal radius of the tubular body (10);
each fin (12) of the static mixer (9) is fastened along the internal side surface (13) of the tubular body (10) so as to form a helix.

2. An exhaust system (1) according to claim 1, wherein each fin (12) of the static mixer (9) presents a radial dimension either smaller than or equal to 0.5 times the internal radius of the tubular body (10).

3. An exhaust system (1) according to claim 1 or 2, wherein each fin (12) of the static mixer (9) is fastened along the internal side surface (13) of the tubular body (10) performing a rotation comprised between 60° and 120° from the inlet opening (14) of the tubular body (10) to the outlet opening (15) of the tubular body (10).

4. An exhaust system (1) according to claim 1, 2 or 3, wherein the fins (12) of the static mixer (9) are symmetrically distributed about the central symmetry axis (11) .

5. An exhaust system (1) according to one of the claims from 1 to 4, wherein the static mixer (9) comprises four fins (12) symmetrically arranged at 90° from each other.

6. An exhaust system (1) according to one of the claims from 1 to 5, wherein (1) the tubular body (10) of the static mixer (9) presents a length comprised between 1 time and 4 times its own diameter.

7. An exhaust system (1) according to claim 6, wherein the tubular body (10) of the static mixer (9) presents a length approximately 1.8 times its own diameter.

8. An exhaust system (1) according to one of the claims from 1 to 7, wherein each fin (12) of the static mixer (9) presents a rectangular cross section.

9. An exhaust system (1) according to claim 8, wherein each fin (12) of the static mixer (9) presents a rectangular cross section having rounded upper and/or lower edges.

10. An exhaust system (1) according to one of the claims 8 or 9, wherein, in the rectangular cross section of each fin (12) of the static mixer (9), the longer side presents a length comprised between 2 and 10 times the length of the smaller side.

11. An exhaust system (1) according to claim 10, wherein, in the rectangular cross section of each fin (12) of the static mixer (9), the longer side presents a length approximately 6 times the length of the smaller side.

12. An exhaust system (1) according to one of the claims from 1 to 11, wherein the catalytic system (7; 5) comprises:
an oxidising catalyser (5) arranged along the exhaust pipe (3); and
a SCR catalytic system (7) arranged along the exhaust pipe (3) downstream of the oxidising catalyser (5) and downstream of the injection device (8).

13. An exhaust system (1) according to one of the claims from 1 to 11, wherein the catalytic system (7; 5) comprises an oxidising catalyser (5) arranged along the exhaust pipe (3) and downstream of the injection device (8) .
